# EUROPÄISCHE PATENTSCHRIFT

(11) **EP 3 592 530 B1**
(45) Veröffentlichungstag und Bekanntmachung des Hinweises auf die Patenterteilung: **29.06.2022**
(21) Anmeldenummer: 18708100.5
(22) Anmeldetag: 27.02.2018
(51) Int. Cl.: B29C 55/14, B29C 61/02, B29C 55/20, B29L 11/00

(54) **FOLIENRECKANLAGE**
FILM STRETCHING SYSTEM
SYSTÈME D'ÉTIRAGE DE FILM

(30) Priorität: 06.03.2017 DE 102017104582
(43) Veröffentlichungstag der Anmeldung: 15.01.2020
(73) Patentinhaber: Lindauer Dornier Gesellschaft mit beschränkter Haftung, 88131 Lindau (DE)
(72) Erfinder: RESCH, Karsten, 88138 Weißensberg (DE); VEIL, Martin, 88131 Lindau (DE)
(86) Internationale Anmeldenummer: PCT/EP2018/054751
(87) Internationale Veröffentlichungsnummer: WO 2018/162278

(56) Entgegenhaltungen:
- EP-A1- 2 980 613
- FR-A1- 2 922 810
- JP-A- H0 623 838
- JP-A- 2012 016 855

## Beschreibung

Die Erfindung betrifft eine Folienreckanlage mit zumindest je einem Querreckbereich und einem Folienschrumpfbereich.

Gießfolien können mit sequentiell oder simultan erfolgender biaxialer Verstreckung auf entsprechenden Folienreckanlagen hergestellt werden.

Simultan arbeitende Folienreckanlagen führen den Prozess der Längsreckung und Querreckung in ein und derselben Maschine durch. Sequentiell arbeitende Folienreckanlagen trennen die beiden Schritte. Erst wird die gegossene Folie in einer Längsreckmaschine in die Länge gezogen. Der Faktor ist dabei je nach Material unterschiedlich (z. B. bei PET ca. 1:3,5 und bei PP ca. 1:5,5). Dieser Längsreckprozess wird in der Regel mit Walzen unterschiedlicher Geschwindigkeit realisiert. Danach wird die Folie in eine weitere Maschine geführt und dort quer gezogen. Dies wird in der Regel durch eine linke und eine rechte Kette realisiert, in welchen die Folie fixiert wird, wobei sich die beiden Ketten in einem Querreckbereich voneinander entfernen. Der Faktor ist dabei je nach Material unterschiedlich (z. B. bei PET ca. 1:4 und bei PP ca. 1:9).

Die Erfindung bezieht sich auf Folien, die sequentiell hergestellt werden. Die sequentielle Herstellung von Folien hat neben vielen Vorteilen eine Begrenzung: Nach der erfolgten Querreckung wird die Folie wärmebehandelt. Diesen Vorgang nennt man auch "Fixieren". Dabei werden die beiden Ketten wieder etwas zusammengefahren. So wird ein gezielter Querschrumpf erreicht. Im Gegensatz zum Reckvorgang mit 350-900% Maßänderung beträgt der Schrumpf je nach Material deutlich unter 20% (z. B. bei PET ca. 4% und bei PP ca. 8%). Da die Folie dabei in der Regel in Längsrichtung in die Kette eingespannt ist und diese eine feste Länge hat, kann in normalen Maschinen der Längsschrumpf nicht mechanisch eingestellt werden. Im Ergebnis weisen so hergestellte Folien unterschiedliche physikalische Werte wie z.B. Streckgrenze in Längs- und Querrichtung auf. Um dem entgegenzuwirken, werden Ketten mit veränderbarer Teilung eingesetzt. Die Erfindung bezieht sich genau auf diese speziellen Querreckmaschinen mit veränderlicher Kettenteilung, welche so einen mechanisch einstellbaren Längsschrumpf erlauben. Man spricht von Schrumpfmaschinen, weil im Gegensatz zum Recken hier eine Verkürzung der Folie stattfindet. Dies findet nach oder während der Querreckung statt. In aller Regel aber außschließlich nach der erfolgten Querreckung.

Mit solchen Maschinen lassen sich z. B. optische Folien herstellen, welche nach der Herstellung bei 150°C im Ofen einen exakt gleichen Schrumpfwert in Längs- und Querrichtung aufweisen. Ziel solcher Maschinen ist es also, nach erfolgter sequentieller Reckung den Längs- und Querschrumpf einer Folie nach der Produktion gezielt aufeinander abstimmen zu können.

Simultan arbeitende Folienreckanlagen können als mechanische Systeme, bekannt als MESIM-Systeme, oder auch elektrische Systeme, bekannt als LISIM-Systeme, ausgebildet sein. Beide Systeme können theoretisch auch das oben beschriebene Schrumpfen nach der erfolgten Querreckung realisieren. Die vorliegende Erfindung beruht auf einem mechanischen System wie die MESIM-Anlagen. Allerdings unterliegen die bekannten MESIM-Anlagen gerade nach dem Recken sehr engen Anwendungsgrenzen. Dies resultiert aus den großen Kräften, die bei den bekannten Systemen nach erfolgter Querreckung in den Ketten vorhanden sind. Die bekannten MESIM-Systeme neigen im Bereich kleiner Teilungen wegen der Selbsthemmung der Kluppen zu ungleichmäßigem Lauf. Sollen für sich verändernde Eigenschaften der zu reckenden Folien Änderungen der Reckverhältnisse vorgenommen werden, so ist das bei den MESIM-Systemen in der Regel nur durch relativ umfangreiche Umbauarbeiten an der Folienreckanlage möglich. Nachfolgend sind einige dieser bekannten MESIM-Systeme und deren Grenzen näher beschrieben.

Die LISIM-Systeme werden in der Beschreibung nicht weiter beschrieben, da diese ein ganz anderes Antriebskonzept aufweisen. Bei diesen Systemen gibt es keine zusammenhängende Kette. Dementsprechend werden auch keine Änderungen der Kettenteilung durch Auslenk- und Verstellsysteme benötigt. Es entstehen damit auch nicht die hohen Auslenkkräfte in den Verstellsystemen.

Das erste Prinzip, welches auch als "Doppelkluppe-Zollstock-Gelenkelemente" bezeichnet wird, weist Kluppenträger auf, welche an einer Hauptführungsschiene, der Kluppenbahn, entlanggeführt werden und welche durch Gelenkstäbe in der Art eines Zollstocks bzw. Gliedermaßstabs miteinander verbunden sind. Die Verbindung ist derart ausgeführt, dass zwischen zwei Kluppenträgern jeweils ein Gelenkpunkt vorhanden ist, an welchem ein zusätzliches Führungselement angelenkt ist. Die Reihe der zusätzlichen Führungselemente, der sogenannten Doppelkluppen, wird in einer zusätzlichen Führungsschiene, einer Steuerschiene, in einem definierten Abstand von der Hauptsteuerschiene geführt, wobei dieser Abstand veränderlich ist. Dieses erste Prinzip für ein mechanisches Getriebe ist beispielsweise aus DE 374 15 82 C2 bekannt.

Das zweite Prinzip, welches ein "Scherensystem ähnlich einem Pantografen" ist, weist Kluppenträger auf, die an einer Hauptführungsschiene, der Kluppenbahn, entlanggeführt werden und durch ein doppeltes System von Gelenkstäben miteinander verbunden sind. Auch hier ist zwischen zwei Kluppen jeweils ein Gelenkpunkt vorgesehen, an dem die Gelenkstäbe sich kreuzen, und zwar wie bei einem Scherengelenk. An jedem Kluppenträger befindet sich ein zusätzliches Führungselement, wobei die Reihe der zusätzlichen Führungselemente in einer zusätzlichen Führungsschiene, der Steuerschiene, in einem Abstand von der Hauptsteuerschiene geführt wird. Dieser Abstand ist veränderlich. Dieses zweite Prinzip ist beispielsweise bekannt aus DE 302 35 05 A1. Bei diesem zweiten Prinzip ist entlang einer Gelenkstabkette, zumindest aber im Bereich der Reckzone, ein Transportband mit Permanentmagneten parallel zu jeder Kluppenführungsbahn angeordnet. Die Glieder der Gelenkstabkette weisen in dem dem Transportband zugewandten Bereich einen Belag aus einem auf ein Magnetfeld ansprechenden Reaktionswerkstoff auf. Der Bewegungsablauf wird nun so realisiert, dass die Bewegungsgeschwindigkeit des Transportbandes größer ist als die Auslaufgeschwindigkeit der zu reckenden Folie, wodurch eine Längsreckung realisiert wird.

Zur Verbesserung der damit verbundenen Nachteile werden bei den mechanischen Systemen daher mehr oder weniger aufwendige Hilfsantriebssysteme am Einlauf und am Auslauf der Anlage eingesetzt. Ein solches System weist zwei Antriebe auf, und zwar einen Antrieb am vorderen Ende der Kluppenkette und einen weiteren Antrieb am rückläufigen Ende der Kette. Diese beiden Antriebe werden in der Regel miteinander synchronisiert, so dass ein im Wesentlichen verzugfreier Umlauf gewährleistet werden kann. Ein derartiges System ist aus US 7 322 078 B2 bekannt. Die beschriebenen zwei Antriebe beziehen sich allein auf den Querreckbereich, die besonderen Probleme, welche beispielsweise bei einem Folienschrumpfbereich auftreten, sind in US 7 322 078 B2 nicht angesprochen. Beide Antriebe sind bewusst am Kettenumkehrpunkt angeordnet, offensichtlich, um einen guten Zahneingriff der angetriebenen Zahnräder in die Kluppenkette zu gewährleisten.

Des Weiteren ist in JP 2004 12 26 40 A1 eine Folienreckanlage beschrieben, welche für hohe Reckgrade, für schlagartiges Recken und auch für hohe Reckgrade in Querreckrichtung geeignet ist. Das schlagartige Recken soll mit einem verkürzten Reckabschnitt gewährleistet werden.

Aus DE 284 1510 B1 ist eine Vorrichtung zum Herstellen einer biaxial verstreckten Folienbahn bekannt, bei welcher als Spannmittel an beiden Seiten der zu streckenden Folie vorgesehene Kluppen hinsichtlich ihrer Lage zueinander veränderbar sind. Die Kluppen sind auf beidseitig der zur reckenden Folie angeordneten endlosen Führungsbahnen geführt und untereinander durch Verbindungsmittel verbunden. Die Vorrichtung weist eine Streckzone, bei welcher die Führungsbahnen zueinander divergieren, und eine Fixierzone auf, bei welcher die Führungsbahnen auch konvergieren. Die Abstände der Kluppen sind in Abhängigkeit von dem gewünschten Längsstreckverhältnis bzw. auch von einem möglichen Längsschrumpfverhältnis über die Verbindungsmittel derart steuerbar, dass deren Abstand, d. h. der Abstand von Kluppe zu Kluppe entweder steigt oder abnimmt. Die Änderung des Abstandes wird mittels einer Trommel realisiert, welche jedes Spannmittel aufweist und auf welcher die Verbindungsmittel ab- und aufspulbar sind. Die bekannte Vorrichtung erlaubt nur sehr geringe Längsschrumpfverhältnisse. Für jede die Spannmittel bzw. Kluppen aufweisende Führungsbahn ist ein jeweiliger Antrieb vorgesehen.

Auch aus DE 3 207 384 A1 ist eine Vorrichtung zur Folienreckung bekannt, bei welcher die als Kluppen ausgebildeten Klemmteile relativ zur Antriebskette, auf welcher die Kluppen befestigt sind, einstellbar sind. Bei der Kluppenkette handelt es sich um eine endlos umlaufende und mittels eines Antriebes antreibbare Kluppenkette, wobei die zu reckende Folie an beiden Seiten mittels der Kluppen gehalten wird und der Abstand zwischen den einzelnen Kluppen in Abhängigkeit vom Längsstreckverhältnis bzw. von einem möglichen Längsschrumpfverhältnis über eine unabhängige und von außen durch Steuerteile beeinflussbare Einrichtung steuerbar sind. Als Träger für die Spannmittel dient ein mit einer Verzahnung versehenes, antreibbares, endloses und in sich nicht dehnbares Zugorgan, mit welchem die in Längsrichtung verschiebbaren Spannmittel über Zahnräder in Eingriff stehen.

Des Weitern ist in US 2018/0290370 eine Folienreckanlage zum Simultanrecken beschrieben. Dabei sind die durch den Ofen laufenden Kluppen zum Halten der Folie mittels Getriebemotoren über Zahnräder mechanisch mit der Antriebskette verbunden. Die Getriebemotoren sind von einem Gehäuse umgeben, das, da dies ebenfalls im Bereich des Ofens angeordnet ist, stets aufwendig gekühlt wird. Jeder Kette sind auf jeder Seite sechs Zahnräder mit entsprechendem Getriebemotor als Antrieb in Querreckbereich zugeordnet. In diesem Querreckbereich wird simultan auch das Längsrecken durchgeführt. Ein separater Folienschrumpfbereich ist bei dem Gegenstand dieser bekannten Folienreckanlage, schon gar nicht ein Schrumpfbereich, welcher hohe Schrumpfgrade ermöglicht, beschrieben. Und schließlich ist in JP 02095825 A eine Simultanreckanlage beschrieben, bei welcher zwar zwischen Antrieben, welche in den jeweiligen Umlenkbereichen der Antriebsketten angeordnet sind, ein Zwischenantrieb bzw. Hilfsantrieb für die Kette im geraden bzw. gestreckten Bereich der Antriebskette vorgesehen ist, diese Antriebe dienen jedoch zum Falten der Kettenglieder, womit der Abstand der einzelnen Kluppen zueinander verringert wird. Bei dieser bekannten Folienreckanlage wird der Zwischenantrieb aber lediglich so dimensioniert, dass er dem Stabilisieren von gewissen Unregelmäßigkeiten im Lauf der jeweiligen Antriebsketten dient. Ein Hinweis darauf, Kräfte in der Kette so auszubilden bzw. so zuzulassen, dass die Kraft unmittelbar vor oder am Beginn des Folienschrumpfbereiches klein ist gegen die Kraft in der Kette am Ende des Querreckbereiches, ist bei diesem bekannten Stand der Technik nicht beschrieben. Demgemäß ist ein Schrumpfen auch nur in sehr geringem Maße vorgesehen und möglich.

Des Weiteren ist aus DE 11 2008 000240 B4 ein einem Pantografen ähnliches Scherensystem bekannt, bei welchem der Abstand zwischen auf einer Kluppenkette angeordneten Kluppen zueinander variabel in Abhängigkeit von einem Raumabstand relativ zu einer Referenzschiene festlegbar ist. Ein Antriebskranz dient der Übertragung der Antriebskraft eines Antriebes auf die Kluppenkette.

Den bekannten Vorrichtungen zum biaxialen Recken von Folien ist gemein, dass zum Antrieb der auf einer Seite jeweils angeordneten Endlos-Kluppenkette jeweils ein einziger Antrieb vorgesehen ist oder dass nur an den jeweiligen Umkehrbereichen der Endlos-Kluppenkette Antriebe vorgesehen sind. Mit derartigen Anordnungen sind nur geringe Schrumpfgrade realisierbar, und zwar selbst bei einer Anordnung gemäß US 73 22 078 B2, weil eine derartige Antriebsordnung zwar für einen Querreckbereich die Belastung auf die Kluppenkette verringert. Die Kluppenkette kann aber bei einem im Übrigen in diesem vorstehend genannten Dokument des Standes der Technik nicht beschriebenen Schrumpfbereich die Belastungen auf die Kluppenkette bzw. die einzelnen Kluppen nicht in einer Weise kompensieren, dass der Verschleiß der Kluppenkette minimalisiert werden kann. Die Kräfte in der Kette nach der Querreckung sollen genügend reduziert werden, um die zur Verkürzung der Kette nötigen Kräfte gering zu halten. Dabei ist zu beachten, dass die Kettenkräfte zu einem sehr hohen Prozentsatz eben in der Querreckung entstehen. Hier im Bereich der Querreckung muss die Arbeit verrichtet werden, und alle Antriebe vor dem Querreckbereich können diese Kraft nicht aufbringen.

Die Aufgabe der Erfindung besteht daher darin, eine Folienreckanlage mit zumindest einem Querreckbereich und einem Folienschrumpfbereich bereitzustellen, bei welcher hohe Schrumpfgrade von beispielsweise bis zu 25% realisiert werden können, ohne dass die auf die Kette wirkenden Kräfte, welche die Kluppen halten und führen, ansteigen, und zwar im Vergleich zu aus den bekannten Systemen vorhandenen Kräften. Insbesondere sollen hohe Auslenkkräfte der Ketten in den Verstellsystemen vermieden werden.

Erfindungsgemäß wird diese Aufgabe durch eine Folienreckanlage mit den Merkmalen gemäß Anspruch 1 gelöst. Zweckmäßige Weiterbildungen sind in den abhängigen Ansprüchen definiert.

Erfindungsgemäß weist die Folienreckanlage zumindest einen Querreckbereich und einen Folienschrumpfbereich auf. Die Folienreckanlage weist eine Endlos-Antriebskette auf jeder Seite der zu reckenden Folie auf, welche als Kluppen ausgebildete Klemmelemente trägt und eine zu behandelnde Folie durch die Anlage bewegt. Die jeweilige Antriebskette ist mittels eines jeweiligen ersten Antriebs antreibbar, welcher im Bereich des Endes des Folienschrumpfbereiches oder hinter diesem Folienschrumpfbereich angeordnet ist. Die Kluppen einer jeden Antriebskette sind in ihrem Abstand zueinander variierbar, welche als Kluppen ausgebildete Klemmelemente trägt und eine zu behandelnde Folie durch die Anlage bewegt.

Im Folienschrumpfbereich müssen die Kluppen in der Lage sein, ihre Abstände zueinander zu verringern. Auf der Endlos-Antriebskette, auf welcher die Kluppen angeordnet sind, sind daher Einrichtungen vorgesehen, mittels welcher die Abstände der Kluppen auf den Schrumpfgrad der Folie einstellbar bzw. anpassbar sind. Vor dem Folienschrumpfbereich ist zumindest ein zweiter Antrieb für die Antriebskette vorgesehen. Dieser zweite Antrieb, welcher auch als Hilfsantrieb bezeichnet werden kann bzw. fungiert, entlastet die Antriebskette vor dem Folienschrumpfbereich, indem die Kräfte der Antriebskette von dem zweiten Antrieb aufgenommen werden. Bei den bekannten Anlagen gehen die Kräfte, welche nach der Querreckung in der Kette vorliegen, direkt in die nötigen Auslenkräfte zur Kürzung der Kette ein. Damit gehen z. B. Reckverhältnis (großer Reckwinkel bedeutet große Kettenkräfte), spezifische Reckkraft (jedes Material hat hier einen spezifischen Wert), Foliendicke (je dicker die zu reckende Folie, umso größer die Kettenkräfte) direkt in den zu realisierenden Schrumpfwert ein. So sind z. B. bei PET-Film mit ca. 6m Folienbreite und 125µm Enddicke nur etwa 2-3% Schrumpf möglich, bevor die Auslenkkräfte zur Kürzung der Kette so groß werden, dass die mechanische Lebensdauer dieser Systeme zu kurz wird. Bei Werten über 3% würden bei dieser Folie die Auslenksysteme sogar mechanisch versagen. Indem nun erfindungsgemäß vor dem Folienschrumpfbereich ein zweiter Antrieb angeordnet ist und in die Antriebskette dort eingreift, werden die Kräfte, welche auf die Antriebskette wirken, vor Beginn des Schrumpfens aus der Kette sozusagen herausgenommen. Das bedeutet, dass die Kette im Wesentlichen kraftfrei gestellt wird. Durch dieses Kraftfrei-Stellen ist es möglich, im Grunde genommen große Auslenkungen der benachbarten Kettenglieder in seitlicher Richtung zur Foliendurchlaufrichtung zu realisieren, ohne dass die Belastungen an den Kettengliedern unverhältnismäßig ansteigen. Erfindungsgemäß ist also eine gesteuerte Kraft im Längsschrumpfbereich durch den zweiten Antrieb, d. h. den Hilfsantrieb bzw. den Zusatzantrieb möglich, wobei dieser zweite Antrieb abschaltbar bzw. auskuppelbar ist. Damit entfallen die Begrenzungen solch mechanischer Schrumpfmaschinen in Bezug auf Folienbreite, Reckwinkel, Foliendicke, Materialkennwerte etc.

Wenn der zweite Antrieb für den Fall zugeschaltet oder eingekuppelt wird, dass im Folienschrumpfbereich ein sogenanntes MD-Schrumpfen durchgeführt werden soll, dann übernimmt der Antrieb vorzugsweise ca. 80% der für das Antreiben der Antriebskette erforderlichen Zugkräfte.

Vorzugsweise ist der erste Antrieb drehzahlgeregelt und der zweite Antrieb drehmomentgeregelt. Damit soll erreicht werden, dass die Last auf den ersten Antrieb im Wesentlichen konstant bleibt. Es wird also der Mindestzug eingehalten, damit die Antriebskette die Tendenz zu ihrer Streckung beibehält. Das bedeutet, dass der erste Antrieb auf einem im Wesentlichen konstanten Mindestzug gehalten wird.

Weiter vorzugsweise greift der zweite Antrieb mittels einer Kettenradverzahnung in die Antriebskette ein. Der zweite Antrieb ist im Bereich vor dem zwischen den beiden Umlenkungen der Endloskette angeordneten Folienschrumpfbereich angeordnet und greift mit seiner Kettenradverzahnung vorzugsweise in eine im Wesentlichen gestreckt laufende Antriebskette ein, im Gegensatz zu dem ersten Antrieb, welcher vorzugsweise am Ende der Antriebskette mit entsprechendem Umschlingungswinkel angeordnet ist.

Vorzugsweise ist die Kettenradverzahnung als Triebstockverzahnung ausgebildet.

Gemäß noch einer Weiterbildung der Erfindung greift der zweite Antrieb mittels einzelner Linearmotoren in die Antriebskette ein, wobei dadurch die Antriebskette angetrieben wird.

Vorzugsweise ist der zweite Antrieb für die umlaufende Kluppenkette derart ausgebildet, dass dieser mittels Kraftübertragungselementen in die Antriebskette eingreift.

Die Tendenz zu immer größeren, breiteren Folienreckanlagen führt beispielsweise dazu, dass pro Anlage eine hohe Anzahl von Kluppen, beispielsweise ca. 2000 Kluppen, vorgesehen werden muss. Je größer die Anlagen werden, umso größer werden die Kettenkräfte nach der Querreckung und umso größer die notwendigen Auslenkkräfte für das Schrumpfsystem bei sonst gleichen Parametern, d. h. umso enger werden die Grenzen für den Einsatz der bekannten mechanischen Schrumpfsysteme. Wenn aufgrund von hohen Schrumpfungsgraden von insbesondere bis zu 25% bei diesen extrem großen und schweren Antriebsketten große Auslenkungen der gelenkig miteinander verbundenen benachbarten Kettenglieder realisiert werden sollen, so würde das dazu führen, dass die Kräfte am Auslenklager zu hoch werden, wodurch es zum Bruch der entsprechenden Bauteile kommen kann. Dabei tritt vor allen Dingen das Problem auf, dass bei einem Eingriff eines Antriebs in einem im Wesentlichen gestreckten Bereich der Kluppenkette ein Problem bezüglich der Einleitung der Kräfte von dem zweiten Antrieb in die Antriebskette vorliegt, weil an der erfindungsgemäß vorgesehen Stelle vor dem Folienschrumpfbereich wegen der gestreckten Kluppenkette verschlechterte Eingriffsbedingungen der Zähne des entsprechenden Antriebs in der Kette vorliegen. Aus diesen Gründen wird gemäß einer Weiterbildung vorgeschlagen, dass ein Triebstockkettenrad als Kettenradverzahnung vorgesehen ist.

Weitere Vorteile, Ausgestaltungen und Details der vorliegenden Erfindung werden nun anhand der Figuren gemäß einem Ausführungsbeispiel beschrieben.

In der Zeichnung zeigen:
- Figur 1a:: eine prinzipielle Draufsicht auf eine Kluppenkette einer Folienreckanlage mit erfasster Folie mit Querreck- und Schrumpfbereich ohne Hilfsantrieb;
- Figur 1b:: ein Detail X aus Figur 1a zur Darstellung der Auslenkung der Kluppenkette mit eingezeichneten entsprechenden Kräften;
- Figur 2a:: eine prinzipielle Draufsicht auf die Kluppenkette einer Folienreckanlage mit erfasster Folie mit Querreckbereich und Schrumpfbereich mit zusätzlichem Hilfsantrieb gemäß der Erfindung;
- Figur 2b:: ein Detail X aus Figur 2a zur Darstellung der Auslenkung der Kluppenkette mit eingezeichneten entsprechenden Kräften;
- Figur 3:: eine perspektivische Ansicht eines Hilfsantriebs mit in die Kluppenkette eingreifendem Kettenrad;
- Figur 4:: das mit der Kluppenkette in Eingriff befindliche Kettenrad gemäß Figur 3 in Draufsicht (ohne dargestellten Hilfsantrieb);
- Figur 5:: ein Hilfsantrieb gemäß einem zweiten Ausführungsbeispiel der Erfindung mit Kraftübertragungselementen in Form von Reibflächen oder Magneten, welche über eine zusätzliche Hilfsantriebskette an der Kluppenkette angreifen; und
- Figur 6:: ein drittes Ausführungsbeispiel eines Hilfsantriebs mit Linearmotoren, die an der Kluppenkette angreifen.

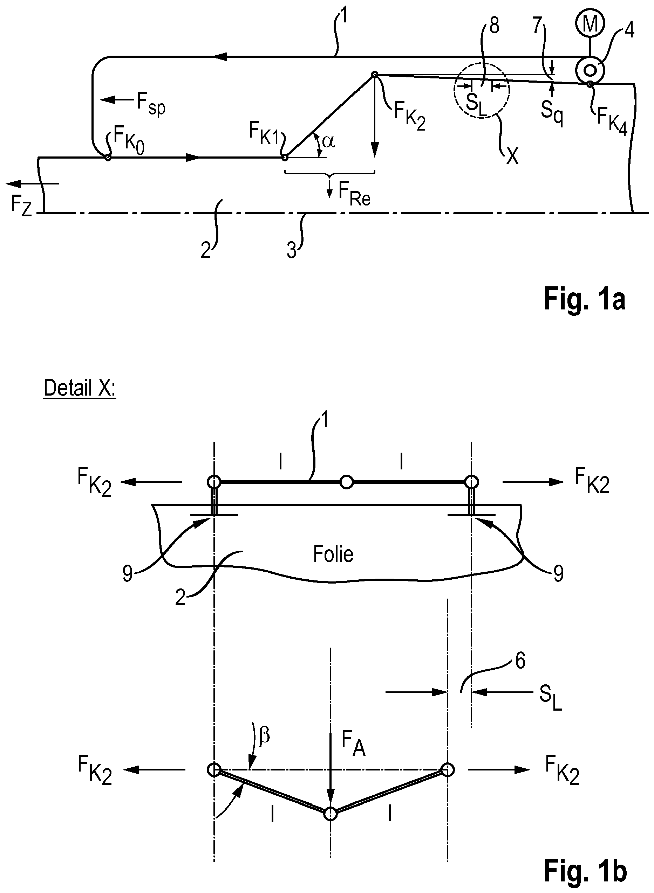

In Figur 1a ist in prinzipieller Darstellung in Draufsicht eine Kluppenkette 1 einer Folienreckanlage mit einer von der Kluppenkette 1 erfassten und durch den dargestellten Abschnitt transportierten und behandelten Folienabschnitt in einem Querreckbereich und einem Schrumpfbereich dargestellt. Dargestellt ist der Einfachheit halber nur die linke Seite der Folie 2 der Folienreckanlage, wobei die Mitte 3 der Folienreckanlage bzw. die Mitte der Folie 2 durch die strichpunktierte Mittellinie dargestellt ist. In der Kluppenkette 1 ist an ihrem Umkehrpunkt, an welchem sie die Folie 2 freigibt, mit einem Antrieb 4 in Form eines Motors M versehen ist. Bei bekannten Anlagen ist dieser Antrieb 4 derjenige Antrieb, welcher die gesamte Kluppenkette 1 hinsichtlich ihres Rücklaufes wie auch hinsichtlich ihres Vorlaufes im Querreckbereich wie im Schrumpfbereich zu bewegen hat.

Unter Berücksichtigung dieser Kraftverhältnisse ergibt sich entsprechend der Detaildarstellung X gemäß Figur 1b im oberen Teil der Figur, dass die Auslenkkraft F_{A} gleich null ist und demzufolge die Kluppenkette 1 gestreckt ist. Die Kette ist beispielhaft durch die beiden Kluppen 9 bzw. für die Klemmstellen der Folie 2 gezeichnet. Die beiden Kluppen 9 weisen zwischen sich in der Mitte jeweils beabstandet mit der halben Kluppenteilung I ein Gelenk auf. Die Kluppenteilung beträgt also 2I. Die obere Figur stellt die Verhältnisse dar, wenn keine Längsschrumpfung S_{L} auftritt. Zusätzlich eingetragen ist die Kettenkraft F_{K2} am Ende des Querreckbereiches, welche hier in die Kette wirkt. Der untere Teil der Detaildarstellung X gemäß Figur 1b zeigt, dass die Kluppenkette 1 zwischen zwei benachbarten Kluppen 9 um das mittlere Gelenk, an welchem die Auslenkkraft F_{A} angreift, aus der gestreckten Lage der Kette mit der Auslenkkraft F_{A} ausgelenkt ist.

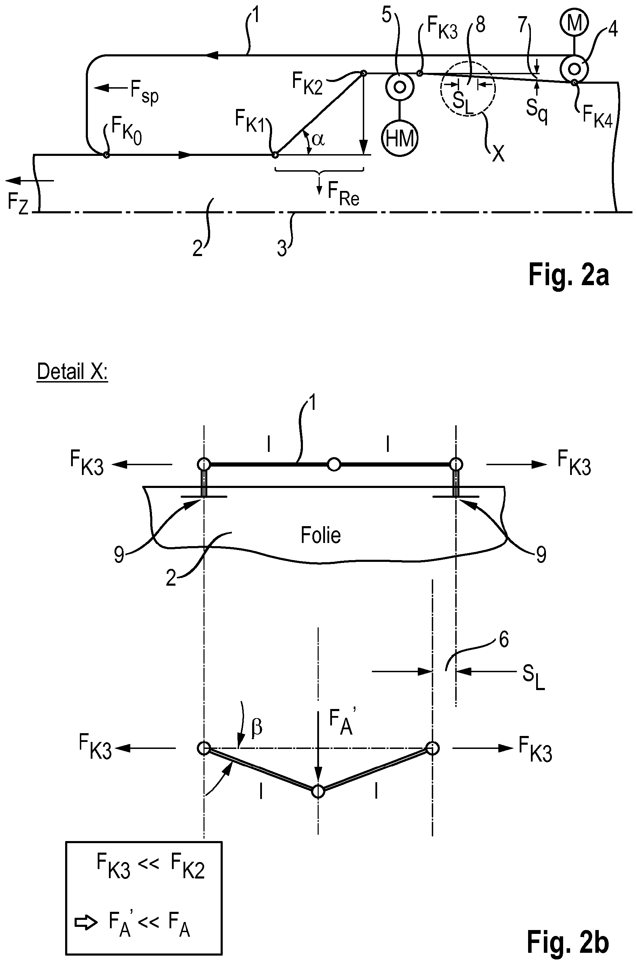

Gemäß Figur 2a ist zusätzlich im Bereich des Beginns des Schrumpfbereiches ein Hilfsantrieb 5 vorgesehen, welcher mittels eines Hilfsmotors HM angetrieben ist und in die Kluppenkette 1 in einem Bereich eingreift, in welchem sowohl die Längs- als auch die Querschrumpfung der Folie 2 durchgeführt wird. Die Längsschrumpfung 8 ist durch S_{L} gekennzeichnet und als Detail X in Figur 2b vergrößert mit entsprechenden eingetragenen wirkenden Kräften gezeigt. Die Folie 2 erfährt außerdem eine mit S_{q} bezeichnete Querschrumpfung 7. Die Längsschrumpfung S_{L} und die Querschrumpfung S_{q} werden im Schrumpfbereich simultan durchgeführt. In Figur 2a links ist für die Kluppenkette 1 die Kettenspannkraft F_{Sp} eingezeichnet. Außerdem sind die Kettenkraft F_{K0} als Kettenkraft für den Beginn des Folieneingriffes, P_{K1} die Kettenkraft für den Beginn des Querreckens, F_{K2} die Kettenkraft zum Ende des Querreckens und F_{K3} die Kettenkraft nach dem Hilfsantrieb 5 sowie F_{K4} die Kettenkraft zum Ende des Folieneingriffs bzw. zum Beginn des Rücklaufs der Kette eingezeichnet. Zwischen F_{K1} und F_{K2} wirkt die Reckkraft F_{Re} im Querreckbereich, bei welchem der Reckwinkel α ebenfalls eingezeichnet ist. Zusätzlich ist die Folienzugkraft F_{Z} eingezeichnet, welche ebenfalls von der Kluppenkette 1 aufgebracht werden muss. Die Kraft F_{K0} ergibt sich aus der halben Zugkraft plus der Kettenspannkraft. Die Kettenkraft F_{K1} ihrerseits ergibt sich aus F_{K0} plus der Reibkraft F_{R}. Unter der Voraussetzung geringer Reibkräfte ergibt sich, dass F_{K}, etwa gleich F_{K0} ist. Im Querreckbereich zwischen F_{K1} und F_{K2} ergibt sich unter Berücksichtigung des Reckwinkels α für die Kettenkraft am Ende der Querreckung F_{K2} die Summe der Kräfte F_{K1} plus F_{Re} geteilt durch sinα plus die ebenfalls wieder vernachlässigbare Reibkraft F_{R}. Bei vernachlässigter Reibkraft ergibt sich auch für die Kettenkraft F_{K4} am Ende des Folieneingriffs bzw. am Beginn des Rücklaufs der Kette, dass F_{K4} etwa gleich groß F_{K3} ist.

Der Betrag der Längsschrumpfung S_{L} beträgt 2I (1 - cosβ). Das bedeutet, dass je größer der Auslenkwinkel β ist, umso größer ist die Längsschrumpfung S_{L}. Die Auslenkkraft wiederum ergibt sich durch 2 F_{K3} x tan β. Das bedeutet, dass je größer β ist, umso größer ist F_{K3} und umso größer ist auch F_{A}'. Der untere Teil der Darstellung gemäß Figur 2b ist mit Längsschrumpfung S_{L} gezeigt, was dadurch erreicht wird, dass durch die Auslenkung mittels der Auslenkkraft F_{A}' die gestreckte Länge der Kette verkürzt wird. Der Vorteil einer derartigen erfindungsgemäßen Folienreckanlage besteht darin, dass ein einfacher Kettenradantrieb verwendet werden kann. Vor allem aber besteht der wesentliche Vorteil darin, dass nahezu jeder Schrumpfwert bei jeder Maschinenkonfiguration realisierbar ist; weil erfindungsgemäß mit eingeschaltetem bzw. eingekuppeltem Hilfsantrieb 5 erreicht werden kann, dass F_{K3} << F_{K2} ist, so dass F_{A}' << F_{A}.

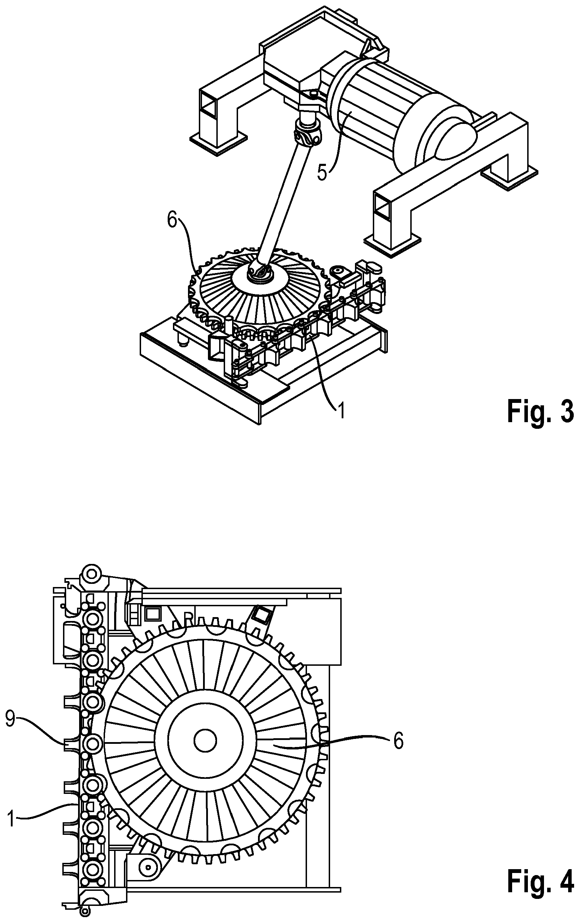

Der erfindungsgemäß vorgesehene zusätzliche Hilfsantrieb muss mit der Kluppenkette 1 synchronisiert werden. Des Weiteren muss berücksichtigt werden, dass mittels eines derartigen zusätzlichen Hilfsantriebes über ein Kettenrad (siehe auch Figuren 3, 4) eine simultane Längsschrumpfung und Querschrumpfung realisiert werden. Der Hilfsantrieb 5 gemäß der vorliegenden Erfindung weist den Vorteil auf, dass dieser die Antriebskette vor dem Folienschrumpfbereich entlastet, indem die der Antriebskette zugeleiteten Kräfte vom Hilfsantrieb, dem zweiten Antrieb, aufgenommen werden.

In Figur 3 ist der erfindungsgemäße Hilfsantrieb 5 mit dem Kettenrad 6 gezeigt, welches im Eingriff mit den Kluppen 9 als dargestellter Teil der Kluppenkette 1 gezeigt ist. In Figur 4 ist in Draufsicht diese Eingriffsbedingung des Kettenrades 6 in die Kluppe 9 der Kluppenkette 1 gezeigt. Der Hilfsantrieb 5 ist der Einfachheit der Darstellung halber weggelassen. Zwar besteht der Nachteil eines Hilfsantriebs, welcher mit einem Kettenrad im im Wesentlichen gestreckten Teil der Kluppenkette 1 mit seinen Zähnen eingreift, darin, dass keine Umschlingung des Kettenrades vorliegt, wie es bei dem Kettenrad des Antriebs 4 der Fall ist. Der wesentliche Vorteil besteht aber darin, dass mit dem Hilfsantrieb 5 eine Entlastung der Kluppenkette vor dem Folienschrumpfbereich derart gewährleistet werden kann, dass die Kräfte der Kluppenkette 1 von dem zweiten Antrieb aufgenommen werden, so dass die Auslenkung mittels der Auslenkkraft F_{A}' für nahezu beliebige Schrumpfgrade einstellbar und realisierbar ist.

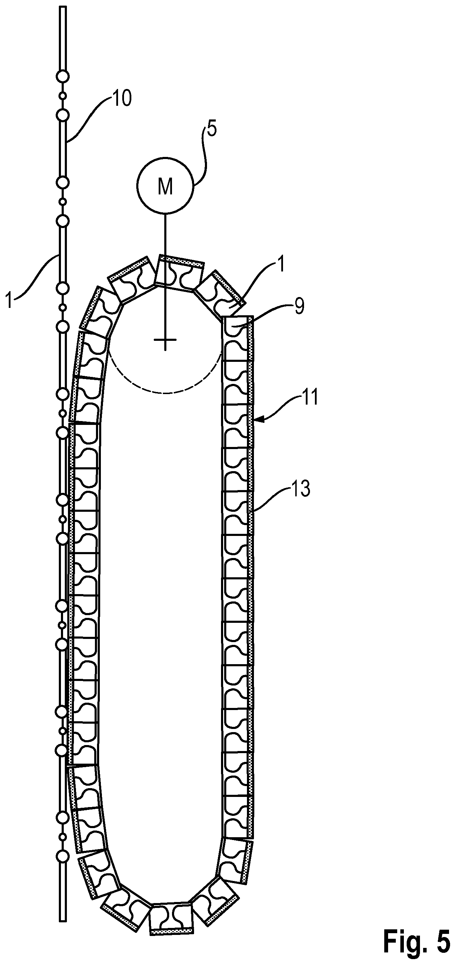

In Figur 5 ist ein zweites Ausführungsbeispiel für einen Hilfsantrieb 5 dargestellt, bei welchem die Einleitung der Kraft des Hilfsanatriebs in die Kluppenkette 1, von welcher lediglich das Rückenteil 10 der Kluppen in prinzipieller Darstellung gezeigt ist, über eine zusätzliche Hilfsantriebskette 11 gewährleistet bzw. realisiert wird, welche einen Reibbelag oder einen Magneten als Kraftübertragungselemente 13 aufweist, um die vom Hilfsantrieb 5 entwickelten Kräfte über einen möglichst langen Bereich der gestreckten Kluppenkette 1 in diese einzuleiten. Gegenüber einem Kettenrad besteht der Vorteil, dass je nach in die Kluppenkette 1 einzuleitenden Kräften des Hilfsantriebs 5 die entsprechende Länge der Hilfsantriebskette 11 gewählt werden kann, um so eine gleichmäßige Krafteinleitung realisieren zu können.

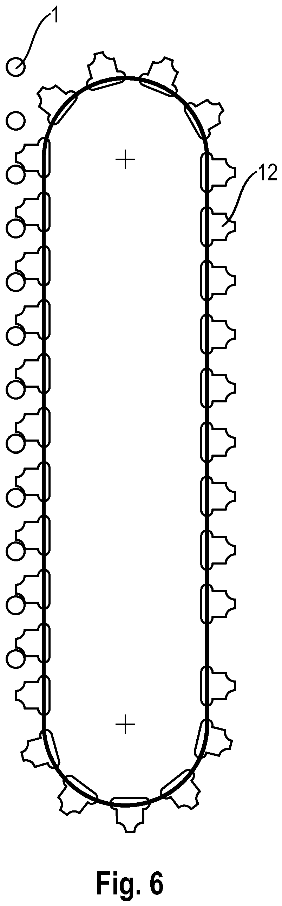

In Anlehnung an das Ausführungsbeispiel gemäß Figur 5 ist in Figur 6 ein weiteres Ausführungsbeispiel gezeigt, bei welchem ebenfalls der Hilfsantrieb mittels Linearmotoren 12 in die eigentliche Kluppenkette 1 realisiert wird. Die Linearmotoren 12 greifen dabei direkt in den gestreckten Bereich der Kluppenkette 1 an zahlreichen aufeinander abfolgenden Kettengliedern an, so dass ein gleichmäßiger verteilter Kraftangriff und damit eine gleichmäßige Krafteinleitung in die eigentliche Kluppenkette von den Linearmotoren 12 realisiert werden kann. Mit den Linearmotoren 12 kann im Vergleich mit den anderen Ausführungsbeispielen gemäß Figur 5 möglicherweise auftretender Schlupf vermieden werden kann. Immerhin hat das Ausführungsbeispiel gemäß Figur 6 den Vorteil, dass die Linearmotoren 12 wie Glieder einer Hilfsantriebskette formschlüssig in die Kettenglieder der Kluppenkette 1 eingreifen, so dass von vornherein Schlupf zwischen den Linearmotoren 12 und der eigentlichen Kluppenkette 1 vermieden werden kann und dennoch eine zuverlässige Krafteinleitung zur Entlastung der Kluppenkette 1 bzw. Antriebskette und damit des Antriebs 4 (siehe Figuren 1a, 2a) gewährleistet werden kann.

### Bezugszeichenliste

- 1: Antriebskette / Kluppenkette
- 2: Folie
- 3: Mitte Folienreckanlage/ Mitte Folie in Längsrichtung
- 4: erster Antrieb
- 5: zweiter Antrieb / Hilfsantrieb
- 6: Kettenrad / Hilfsantrieb
- 7: Querschrumpfung S_{q}
- 8: Längsschrumpfung S_{L}
- 9: Kluppe
- 10: Rückenteil / Kluppe
- 11: Hilfsantriebskette
- 12: Linearmotoren
- 13: Kraftübertragungselement (Reibbelag oder Magnet)
- α: Reckwinkel
- β: Auslenkwinkel
- I: halbe Kluppenteilung
- F_{A}: Auslenkkraft ohne Hilfsantrieb
- F_{A}': Auslenkkraft mit HilfsantriebF_{K0} Kettenkraft Beginn Folieneingriff
- F_{K1}: Kettenkraft Beginn Querrecken
- F_{K2}: Kettenkraft Ende Querrecken
- F_{K3}: Kettenkraft nach vorhandenem Hilfsantrieb
- F_{K4}: Kettenkraft Ende Folieneingriff / Beginn Rücklauf Kluppenkette
- F_{Re}: Reckkraft
- F_{R}: Reibkraft
- F_{Z}: Folienzugkraft
- F_{Sp}: Kettenspannkraft
- HM: Hilfsmotor
- M: Motor

## Patentansprüche

1. Folienreckanlage zum sequentiellen biaxialen Verstrecken mit zumindest je einem Querreckbereich und einem Folienschrumpfbereich, welche eine eine zu behandelnde Folie (2) durch die Anlage bewegende Endlos-Antriebskette (1) aufweist, welche als Kluppen (9) ausgebildete Klemmelemente trägt, welche Antriebskette (1) mittels eines ersten, im Bereich des Endes des Folienschrumpfbereiches oder hinter diesem angeordneten Antriebs (4) antreibbar ist und mit welcher die Kluppen (9) in ihrem Abstand zueinander variierbar sind,
**dadurch gekennzeichnet, dass**
vor dem Folienschrumpfbereich, in welchem die Abstände der Kluppen (9) zueinander verringerbar sind, zumindest ein zweiter Antrieb (5) angeordnet ist, welcher eingekuppelt über eine Kettenradverzahnung den ersten Antrieb (4) durch Aufnahme der Kräfte der Antriebskette (1) vor dem Folienschrumpfbereich entlastet und mit welchem im eingekuppelten Zustand erreicht wird, dass eine Kettenkraft F_{K3} nach dem Hilfsantrieb (5) klein gegen eine Kettenkraft F_{K2} zum Ende des Querreckbereiches ist, so dass eine Auslenkung benachbarter Kettenglieder in seitlicher Richtung zur Foliendurchlaufrichtung für beliebige Schrumpfgrade bis zu 25% einstellbar ist.

2. Folienreckanlage nach Anspruch 1, **dadurch gekennzeichnet, dass** der erste Antrieb (4) drehzahlgeregelt und der zweite Antrieb (5) drehmomentgeregelt ist und den ersten Antrieb (4) auf einem im Wesentlichen konstanten Mindestzug hält.

3. Folienreckanlage nach Anspruch 1 oder 2, **dadurch gekennzeichnet, dass** der zweite Antrieb (5) mit einer Kettenradverzahnung in die Antriebskette (1) eingreift.

4. Folienreckanlage nach Anspruch 3, **dadurch gekennzeichnet, dass** die Kettenradverzahnung als Triebstockverzahnung ausgebildet ist.

5. Folienreckanlage nach Anspruch 1, **dadurch gekennzeichnet, dass** der zweite Antrieb (5) nach Beginn des Querreckbereiches oder im Wesentlichen in dessen Mitte oder nach dessen Ende und vor dem Folienschrumpfbereich in die Antriebskette (1), diese antreibend, eingreift.

6. Folienreckanlage nach Anspruch 1, **dadurch gekennzeichnet, dass** der zweite Antrieb (5) wahlweise zu- oder abschaltbar ist.

## Claims

1. Film stretching system for sequential, bi-axial stretching by way of at least one transverse stretching region and one film shrinking region, which has a continuous drive chain (1) that moves a film (2) to be treated though the system and that supports clamping elements configured as clips (9), said drive chain (1) being able to be driven by means of a first drive (4) disposed in the region of the end of the film shrinking region or behind the latter and by way of which drive chain (1) the clips (9) are variable in terms of the mutual spacing thereof, **characterized in that** at least one second drive (5) is disposed ahead of the film shrinking region in which the mutual spacings of the clips (9) are reducible, said second drive (5), when coupled by way of a chain wheel toothing, relieving the first drive (4) by absorbing the forces of the drive chain (1) ahead of the film shrinking region, and by way of which second drive (5) in the coupled state it is achieved that a chain force F_{K3} after the auxiliary drive (5) is small in comparison to a chain force F_{K2} at the end of the transverse stretching region such that a deflection of adjacent chain links in the direction lateral to the film running direction is adjustable for arbitrary shrinkage rates up to 25%.

2. Film stretching system according to Claim 1, **characterized in that** the first drive (4) is controlled in terms of rotating speed, and the second drive (5) is controlled in terms of torque, the latter keeping the first drive (4) to a substantially constant minimum tension.

3. Film stretching system according to Claim 1 or 2, **characterized in that** the second drive (5) engages in the drive chain (1) by way of a chain wheel toothing.

4. Film stretching system according to Claim 3, **characterized in that** the chain wheel toothing is configured as a lantern gear toothing.

5. Film stretching system according to Claim 1, **characterized in that** the second drive (5) after the start of the transverse stretching region, or substantially in the centre thereof, or after the end thereof, and ahead of the film shrinking region, engages in the drive chain (1) so as to drive the latter.

6. Film stretching system according to Claim 1, **characterized in that** the second drive (5) is able to be selectively switched on or off.

## Revendications

1. Installation d'étirage de film pour l'étirage biaxial séquentiel, comprenant au moins une zone d'étirage transversal et une zone de rétraction du film, qui présente une chaîne d'entraînement sans fin (1) déplaçant un film à traiter (2) à travers l'installation, qui porte des éléments de serrage réalisés sous forme de pinces (9), laquelle chaîne d'entraînement (1) peut être entraînée au moyen d'un premier entraînement (4) agencé dans la zone de l'extrémité de la zone de rétraction du film ou derrière celle-ci, et avec laquelle les pinces (9) peuvent être variées en termes de leur distance les unes des autres,
**caractérisée en ce que**
avant la zone de rétraction du film, dans laquelle les distances des pinces (9) les unes des autres peuvent être réduites, est agencé au moins un deuxième entraînement (5) qui, couplé par l'intermédiaire d'une denture de roue à chaîne, décharge le premier entraînement (4) par absorption des forces de la chaîne d'entraînement (1) avant la zone de rétraction du film et avec lequel on obtient à l'état couplé qu'une force de chaîne F_{K3} après l'entraînement auxiliaire (5) est faible par rapport à une force de chaîne F_{K2} vers la fin de la zone d'étirage transversal, de telle sorte qu'une déviation de maillons de chaîne voisins en direction latérale par rapport à la direction de passage du film est réglable pour des degrés de rétraction quelconques jusqu'à 25 %.

2. Installation d'étirage de film selon la revendication 1, **caractérisée en ce que** le premier entraînement (4) est régulé en vitesse de rotation et le deuxième entraînement (5) est régulé en couple et maintient le premier entraînement (4) à une traction minimale essentiellement constante.

3. Installation d'étirage de film selon la revendication 1 ou 2, **caractérisée en ce que** le deuxième entraînement (5) s'engage dans la chaîne d'entraînement (1) avec une denture de roue à chaîne.

4. Installation d'étirage de film selon la revendication 3, **caractérisée en ce que** la denture de roue à chaîne est réalisée sous forme de denture d'entraînement.

5. Installation d'étirage de film selon la revendication 1, **caractérisée en ce que** le deuxième entraînement (5) s'engage dans la chaîne d'entraînement (1) après le début de la zone d'étirage transversal ou essentiellement au milieu de celle-ci ou après la fin de celle-ci et avant la zone de rétraction du film, en entraînant celle-ci.

6. Installation d'étirage de film selon la revendication 1, **caractérisée en ce que** le deuxième entraînement (5) peut être mis en marche ou arrêté au choix.
